# EUROPEAN PATENT APPLICATION

(11) **EP 4 002 247 A1**
(43) Date of publication of application: **25.05.2022**
(21) Application number: 21207215.1
(22) Date of filing: 09.11.2021
(51) Int. Cl.: G06Q 20/18, G06Q 20/20, G07F 7/10

(54) **PAYMENT DEVICE AND A METHOD FOR PERFORMING A PAYMENT USING A PAYMENT DEVICE**

(30) Priority: 13.11.2020 SE 2051328
(71) Applicant: DOVER FUELING SOLUTIONS UK LIMITED, Edinburgh EH3 8EH (GB)
(72) Inventor: Larsson, Bengt I, 274 53 SKIVARP (SE)
(74) Representative: AWA Sweden AB

(57) **Abstract**

The invention relates to a payment device (1). The payment device (1) comprises a user input device (2), a contactless card reader (3), a housing (4) enclosing the user input device (2) and the contactless card reader (3), the housing (4) having an upper and lower section, and a transparent plate (5) arranged above the user input device (2) and the contactless card reader (3) in the upper section of the housing (4) thereby providing a user interface. The invention also related to a method for performing a payment using a payment device (1).

## Description

### Technical field

The invention relates to a payment device and a method for performing a payment transaction using a payment device.

### Background art

When refueling a tank of a motor vehicle today, it is a common measure to pay for the fuel using a self-service payment terminal. The use of a payment terminal instead of paying inside a gas station facilitates the refueling process and saves time for a user.

Today, different markets have different requirements for payment terminals. Due to the different requirements and regulations in different markets, in combination with different installation designs, different configurations, especially in respect of the user interface mechanism, are required. For example, some countries require ADA standards while other have regulations regarding zoning on a gas station. The installation of the freestanding payment terminal can also vary from station to station, due to islands and orientation.

The conventional payment terminals are at least equipped with a card reader for receiving a payment card, a key pad for entering a code connected to the payment card and a graphic display providing instructions to a user during the payment process.

EP2756472 A4 discloses mobile payment system for effecting payment for a contemporaneous transaction comprises a payment termnial having a proximity reader configured to detect an identifier associated with a wireless communication device. A central server is in operative communication with the payment terminal and the wireless communication device. The payment terminal comprises a card reader, a contactless card reader, a kay pad and a graphical display.

A problem associated with payment terminals according to known prior art is that they are expensive to manufacture.

### Summary of the invention

It is an object of the present invention to provide an improvement of payment devices according to prior art. A particular object is to provide a user-friendly and cost-efficient payment device for a fuel dispensing unit.

According to a first aspect, these and other objects, and/or advantages that will be apparent from the following description of embodiments, are achieved, in full or at least in part, by a payment device. The payment device comprises a user input device, a contactless card reader, a housing enclosing the user input device and the contactless card reader, the housing having an upper and lower section, and a transparent plate arranged above the user input device and the contactless card reader in the upper section of the housing thereby providing a user interface.

This is advantageous in that there is no need for a graphical display which is one of the most expensive components in the payment device. The graphical display can be eliminated due to the user input device and the contactless card reader being visible through the transparent plate.

The housing provides for a secure payment device with is safe when it comes to tampering by a fraudulent party. All of the sensitive components are enclosed in the housing and any information can be sent therefrom in a encrypted manner thereby making the payment transaction completely safe for the user.

The user input device may comprise a pin pad or a finger print sensor.

The user input device may comprise at least one capacitive sensor.

The transparent plate may comprise a screened glass plate.

The payment device may further comprise a user input device light element and a contactless card reader light element, wherein the transparent plate is arranged above the light elements.

The payment device may further comprise a progress indicator light element, wherein the transparent plate is arranged above the progress indicator light element.

The progress indicator light element may comprise at least one light emitting diode.

The payment device may further comprise an antenna connected to the contactless card reader, wherein the antenna is arranged along an outer periphery of the housing.

The payment device may further comprise a screen, wherein the transparent plate is arranged above the screen.

According to a second aspect, the objects are achieved in full, or at least in part a payment terminal for a fuel dispensing unit. The payment terminal comprises a payment device according to features described above.

According to a third aspect, the objects are achieved in full, or at least in part a fuel dispensing unit. The fuel dispensing unit comprises a payment device according to the features described above.

According to a fourth aspect, the objects are achieved in full, or at least in part, by a method for performing a payment transaction using a payment device. The method comprises activating a contactless card reader light element, reading a card using a contactless card reader, deactivating the contactless card reader light element, activating a user input device light element, and receiving user input of a user input device.

The contactless card reader light element, the contactless card reader, the user input device light element and the user input device may be arranged below a transparent plate.

The user input device may comprise a pin pad or a finger print sensor.

The user input device may comprise at least one capacitive sensor.

It should be noted that the different embodiments of the payment device that is described above are exemplifying only. The embodiments may be combined with each other in any suitable way depending on the requirements established for the payment device.

It should be further noted that the different steps of the method described above may be conducted in any suitable order.

Effects and features of the second, third and fourth aspects of the present invention are largely analogous to those described above in connection with the first aspect the inventive concept. Embodiments mentioned in relation to the first aspect of the present invention are largely compatible with the further aspects of the invention.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

As used herein, the term "comprising" and variations of that term are not intended to exclude other additives, components, integers or steps.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 illustrates a perspective view of an exemplary embodiment of a payment device according to a first aspect of the invention.
Fig. 2A and Fig. 2B illustrate a perspective view of another exemplary embodiment of a payment device according to a first aspect of the invention.
Fig. 3A and Fig. 3B illustrate a perspective view of another exemplary embodiment of a payment device according to a first aspect of the invention.
Fig. 4A and Fig. 4B illustrate a perspective view of another exemplary embodiment of a payment device according to a first aspect of the invention.
Fig. 5 illustrates a perspective view of an exemplary embodiment of a payment terminal according to a second aspect of the invention.
Fig. 6 illustrates a perspective view of an exemplary embodiment of a fuel dispensing unit according to a third aspect of the invention.

### Detailed description of preferred embodiments of the invention

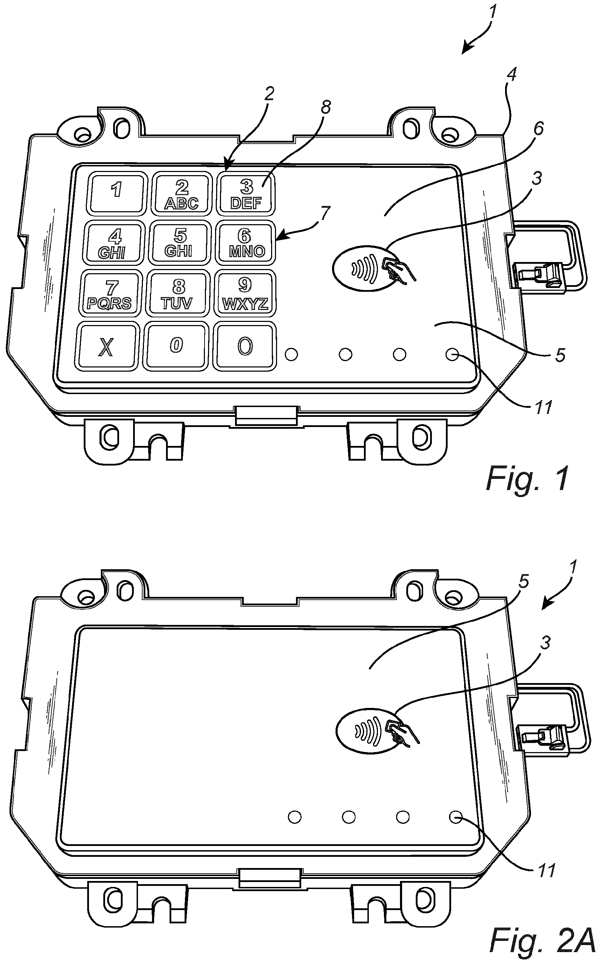

Fig. 1 illustrates an exemplary embodiment of a payment device 1. The payment device 1 comprises a user input device 2, a contactless card reader 3, a housing 4 enclosing the user input device 2 and the contactless card reader 3, and a transparent plate 5 arranged above the user input device 2 and the contactless card reader 3 in an upper section of the housing 4 thereby providing a user interface 6.

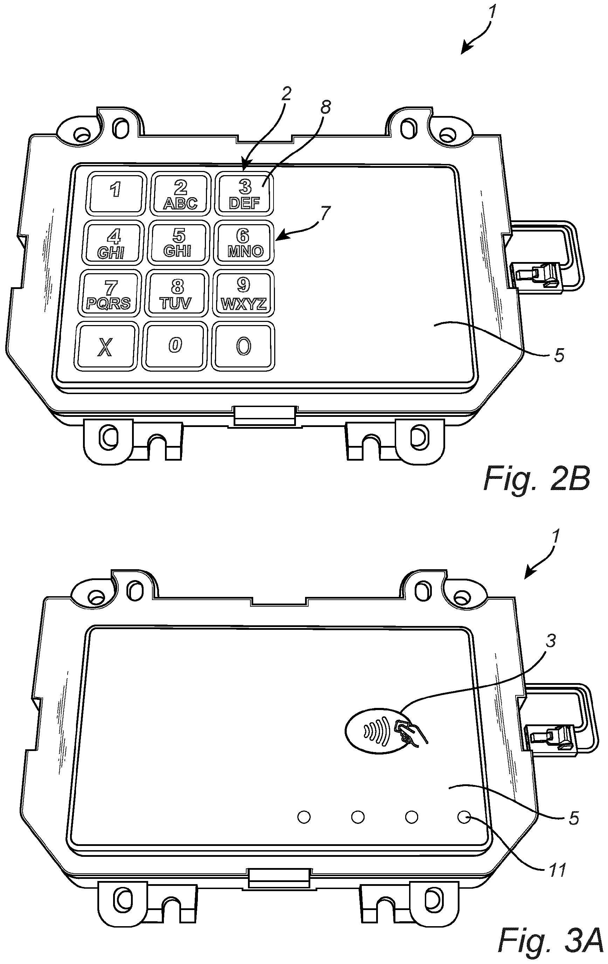

The user input device 2 is arranged at the left side of the payment device 1 and the contactless card reader 3 is placed on the right side of the payment device 1. The contactless card reader 3 is used to identify a payment card provided by the user. The user input device 2 is normally used to confirm a user identity connected to the payment card right after the payment card has been recognized by the contactless card reader 3 during a payment transaction in the payment device 1. The user input device 2 according to the embodiment illustrated in Fig. 2A and 2B comprises a pin pad 7. In this case, the user identity is confirmed by inputting a pin code connected to the payment card to the pin pad 7. The keys 8 of the pin pad comprises capacitive sensor elements (not shown) which are used to identify which keys 8 are being pressed by the user. The pin pad 7 and the contactless card reader 3 are protected by the transparent plate 5 which comprises a screened glass plate.

The payment device 1 comprises a user input device light element (not shown) arranged in connection with the user input device 2 below the transparent plate 5. The payment device 1 also comprises a contactless card reader light element (not shown) arranged in connection with the card reader light element below the transparent plate 5. The user input device light element and the contactless card reader light element may also be constituted be one and the same light element.

Preferably, the payment device 1 has a progress indicator light element 11 arranged in connected with the contactless card reader 3 below the transparent plate 5. In this specific embodiment, the progress indicator light element 11 comprises four emitting diodes. The progress indicator light element 11 can be used to guide the user through the payment transaction in the payment device 1. For example, when the payment card is to be held close to the contactless card reader 3, the light emitting diodes of the progress indicator light element 11, placed in connection with the contactless card reader 3, are activated. When the payment card has been read by the contactless card reader, the light emitting diodes of the progress indicator light element 11 are deactivated.

The payment device 1 comprises an antenna (not shown) connected to the contactless card reader 3. The antenna is arranged along an outer periphery of the housing 4 surrounding the components disclosed above. This is a space-efficient solution for the antenna which also will eliminate the risk of the antenna getting entangled with the further sensitive components of the payment device 1.

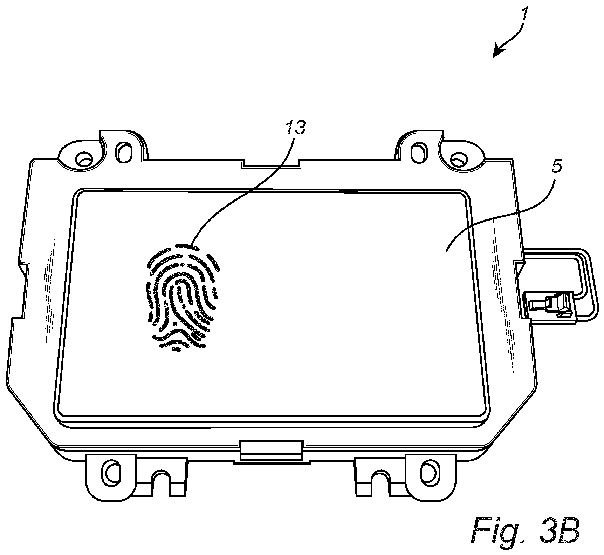

In Fig. 3A and 3B, another exemplary embodiment of the payment device 1 is illustrated. Here, the user input device 2 comprises a fingerprint sensor 13 instead of the pin pad 7. In this case, the user is identified by putting a finger onto the fingerprint sensor 13 and thereafter compared to the information of the payment card. The remaining features of the payment device 1 remains the same as described above.

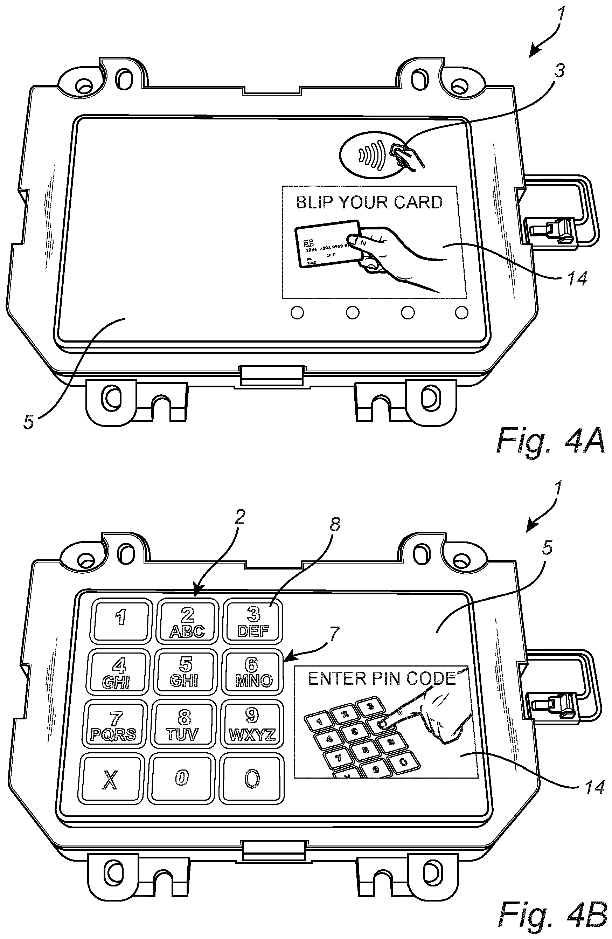

Fig. 4A and 4B illustrates another exemplary embodiment of the payment device 1. In this embodiment, the payment device 1 further comprises a screen 14 which is arranged in connection with the contactless card reader 3 below the transparent plate 5. The screen 14 can be used to guide the user through the payment transaction in the payment device 1. For example, when it is time for the user to hold the payment card towards the contactless card reader 3, it will state "blip your card" on the screen 14. Thereafter, when it is time for the user to enter the pin code connected to the payment card, it will state "enter pin code" on the screen 14.

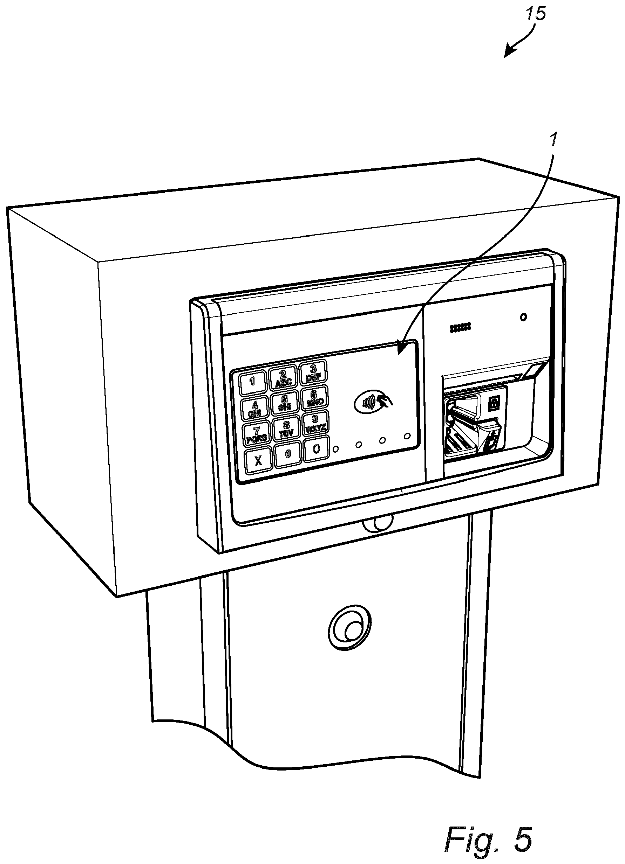

Fig. 5 illustrates an exemplary embodiment of a payment terminal 15 comprising the payment device 1.

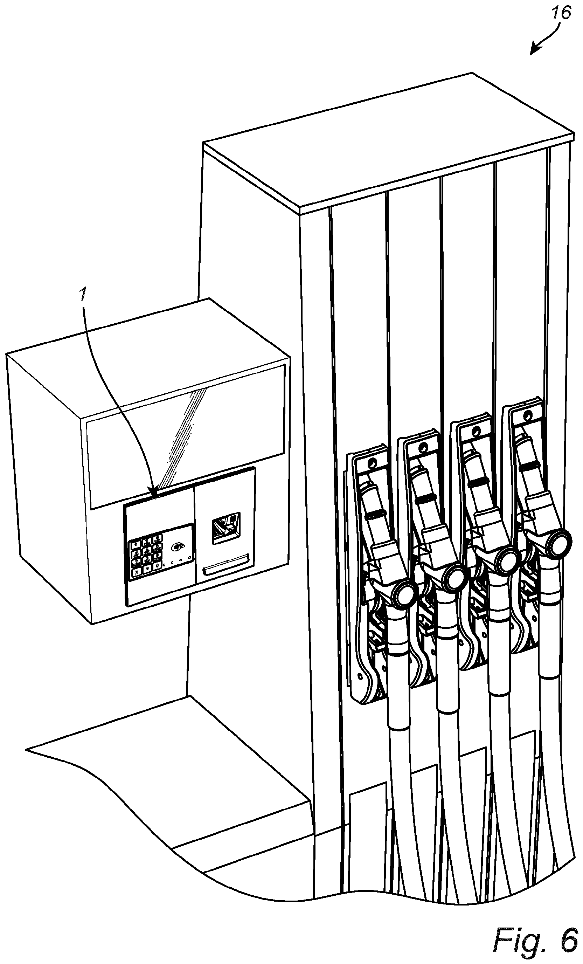

Fig. 6 illustrates an exemplary embodiment of a fuel dispensing unit 16 comprising the payment device 1.

When the payment device 1 is used to conduct a payment transaction, for example in connections with a refuelling process of a vehicle, the following steps are conducted according to one exemplary method.

Firstly, the contactless card reader light element is activated such that the contactless card reader 3 itself, or a symbol illustrating where the contactless card reader 3 is located, is illuminated. The progress indicator light element 11 may also be activated to help guiding the user towards the contactless card reader 3. Thereafter, the payment card provided by the user and held in the vicinity of the contactless card reader 3 is read by the contactless card reader 3. Now, the contactless card reader light element is deactivated such that the contactless card reader 3 itself, or a symbol illustrating where the contactless card reader 3 is located, no longer is illuminated. As a next step, the user input device light element is activated such that the user inputting device 2 is illuminated. Thereafter, a user input is received from the user input device 2 inputted by the user in terms of a pin code or a fingerprint. When the user is identified as the payment card holder, the payment transaction can be completed. Since the user is guided through the different steps in the payment transaction by means of the components such as the light elements and the progress indicator light element 11 the need for a graphical screen if even further eliminated.

The skilled person realizes that a number of modifications of the embodiments described herein are possible without departing from the scope of the invention, which is defined in the appended claims.

For instance, the progress indicator light element 11 may be arranged at any suitable location on the payment device 1. The same applies for the other components of the payment device 1. Size and shape of the components may also be varied.

## Claims

1. A payment device (1), comprising:
a user input device (2),
a contactless card reader (3),
a housing (4) enclosing the user input device (2) and the contactless card reader (3), the housing (4) having an upper and lower section, and
a transparent plate (5) arranged above the user input device (2) and the contactless card reader (3) in the upper section of the housing (4) thereby providing a user interface (6).

2. The payment device (1) according to claim 1, wherein the user input device (2) comprises a pin pad (7) or a finger print sensor (13).

3. The payment device (1) according to claim 1 or 2, wherein the user input device (2) comprises at least one capacitive sensor.

4. The payment device (1) according to any one of the preceding claims, wherein the transparent plate (5) comprises a screened glass plate.

5. The payment device (1) according to any one of the preceding claims, further comprising a user input device light element and a contactless card reader light element, wherein the transparent plate (5) is arranged above the light elements.

6. The payment device (1) according to any one of the preceding claims, further comprising a progress indicator light element (11), wherein the transparent plate (5) is arranged above the progress indicator light element (11).

7. The payment device (1) according to claim 5, wherein the progress indicator light element (11) comprises at least one light emitting diode.

8. The payment device (1) according to any one of the preceding claims, further comprising an antenna connected to the contactless card reader (3), wherein the antenna is arranged along an outer periphery of the housing (4).

9. The payment device (1) according to any one of the preceding claims, further comprising a screen (14), wherein the transparent plate (5) is arranged above the screen (14).

10. A payment terminal (15) for a fuel dispensing unit (16), comprising a payment device (1) according to any one of claims 1 to 9.

11. A fuel dispensing unit (16), comprising a payment device (1) according to any one of claims 1 to 9.

12. A method for performing a payment transaction using a payment device (1), the method comprising
activating a contactless card reader light element,
reading a card using a contactless card reader (3),
deactivating the contactless card reader light element,
activating a user input device light element, and
receiving user input of a user input device (2).

13. The method according to claim 12, wherein the contactless card reader light element, the contactless card reader (3), the user input device light element and the user input device (2) are arranged below a transparent plate (5).

14. The method according to claim 12 or 13, wherein the user input Device (2) comprises a pin pad (7) or a finger print sensor (13).

15. The method according to any one of the claims 12 to 14, wherein the user input device (2) comprises at least one capacitive sensor.
